# FASCICULE DE BREVET EUROPEEN

(11) **EP 2 130 113 B1**
(45) Date de publication et mention de la délivrance du brevet: **03.08.2011**
(21) Numéro de dépôt: 08716996.7
(22) Date de dépôt: 20.02.2008
(51) Int. Cl.: G06F 3/045

(54) **DISPOSITIF DE COMMANDE ÉLECTRIQUE POUR VÉHICULE AUTOMOBILE**
ELEKTRISCHE STEUEREINRICHTUNG FÜR EIN AUTOMOBIL
ELECTRIC CONTROL DEVICE FOR AN AUTOMOBILE

(30) Priorité: 02.03.2007 FR 0701559
(43) Date de publication de la demande: 09.12.2009
(73) Titulaire: DAV, 94000 Creteil (FR)
(72) Inventeur: LAURENT, Patrice, 74106 Annemasse (FR); DROUIN, Xavier, 74106 Annemasse (FR); BONHOURE, Patrick, F-74106 Annemasse (FR)
(74) Mandataire: Sogan, Gloria
(86) Numéro de dépôt international: PCT/EP2008/052093
(87) Numéro de publication internationale: WO 2008/107308

(56) Documents cités:
- WO-A-97/11473
- WO-A-98/08241
- WO-A-2006/129945
- US-A- 5 335 557

## Description

La présente invention concerne un dispositif de commande électrique pour véhicule automobile par surface tactile utilisant des résistances sensibles à la pression, par exemple pour la commande d'un mécanisme motorisé d'ouverture et/ou de fermeture d'au moins un ouvrant.

L'invention s'applique également pour la commande d'un organe électronique pour un écran multimédia ou un système de climatisation de véhicule automobile.

On a proposé, plus récemment, d'utiliser pour ces commandes des surfaces tactiles permettant de détecter un appui simple du doigt du conducteur et, en fonction de la position de l'appui détecté et/ou du déplacement ultérieur de cet appui sur la surface, de déclencher un type particulier d'action ou de commande d'organe du véhicule. On pourra se référer par exemple aux documents FR 2 798 329, FR 2 800 885, US 6 157 372 et WO97/11473. Ces surfaces tactiles peuvent être de tout type et utiliser différentes technologies.

Ainsi la technologie utilisant des résistances sensibles à la pression (également connue sous le nom capteur FSR pour « Force Sensing Resistor ») devance de plus en plus d'autres technologies équivalentes, comme par exemple des technologies capacitives ou encore optiques, grâce à sa facilité de mise en oeuvre et à sa robustesse.

De tels capteurs sont par exemple connus sous le nom « tablette digitalisante » (dénomination anglaise "Digitizer pad") et on cite comme art antérieur les documents suivants : US 4,810,992, US 5,008,497, FR 2683649 ou encore EP 0 541 102.

Ces capteurs comprennent des couches semi-conductrices prises en sandwich entre par exemple une couche conductrice et une couche résistive. En exerçant une pression sur la couche FSR, sa résistance ohmique diminue, permettant ainsi, par application d'une tension adaptée, de mesurer la pression appliquée et/ou la localisation de l'endroit où la pression est exercée.

Les documents WO2006/129945, US5,335,557 et WO98/082241 decrivent des capteurs de forme tridimensionnelle assez simple et sans donner de détails de construction.

La surface tactile des capteurs FSR se présente sous une forme plane ne pouvant être courbée que très légèrement sur une dimension, ce qui empêche toute réalisation tridimensionnelle.

Or, pour améliorer l'ergonomie des véhicules automobiles et notamment pour des interrupteurs ou claviers de commande, il peut être nécessaire d'intégrer les capteurs de surface tactile dans des dispositifs de commande présentant une surface tridimensionnelle en retrait ou en saillie, présentant par exemple une forme galbée plus ou moins importante.

Avec les capteurs de surface tactile actuels, le rayon admissible par la zone active du capteur est faible (le rayon de courbure doit être supérieur à 250 mm), ce qui limite le choix de la forme du dispositif de commande.

Une alternative consiste à disposer le capteur de surface tactile à plat dans le dispositif de commande et à donner une forme galbée au dispositif en recouvrant le capteur d'une peau, tel qu'une peau en silicone, dont l'épaisseur est fonction du galbe souhaité.

Ainsi, pour obtenir un dispositif de commande de forme galbée, on dispose sur le capteur une peau dont l'épaisseur est plus importante au centre que sur les bords. Toutefois, cette disposition diminue la sensibilité du capteur étant donné que les efforts sont transmis au capteur à travers l'épaisseur de la peau.

Le but de la présente invention est donc de proposer un dispositif de commande électrique pour véhicule automobile comprenant un capteur à surface tactile susceptible de prendre une forme tridimensionnelle tout en conservant une sensibilité du touché uniforme.

A cet effet, l'invention a pour objet un dispositif de commande électrique pour véhicule automobile, comportant un capteur à surface tactile utilisant des résistances sensibles à la pression et s'assemblant avec un support présentant une surface tridimensionnelle en retrait ou en saillie, caractérisé en ce que la surface tactile du capteur présente une forme façonnée de telle sorte qu'à l'état assemblé, au moins une partie des surfaces tactiles façonnées se rejoignent en épousant la forme de ladite surface tridimensionnelle pour former une surface tactile sensiblement continue.

Selon d'autres caractéristiques de l'invention,
- la surface tactile façonnée présente un nombre prédéfini de bandes d'arc de cercle dont les petits côtés arqués sont reliés à une base commune présentant une forme de disque de sorte que ladite surface tactile épouse un support présentant une surface en retrait de forme tronconique,
- la surface tactile façonnée présente un nombre prédéfini de bandes d'arc de cercle dont les grands côtés arqués sont reliés à une base commune présentant une forme parallélépipédique de sorte que ladite surface tactile épouse un support présentant une surface en retrait de forme tronconique,
- la surface tactile façonnée présente entre six et douze, de préférence dix bandes d'arc de cercle,
- la surface tactile façonnée présente une forme de spirale de sorte que ladite surface tactile épouse un support présentant une surface bombée en saillie, de préférence sensiblement sphérique,
- la surface tactile façonnée présente une forme de spirale de sorte que ladite surface tactile épouse un support présentant une surface en saillie sensiblement conique,
- la surface tactile façonnée présente un nombre prédéfini de bandes trapézoïdales dont les petites bases sont reliées à une base commune polygonale, de sorte que ladite surface tactile épouse un support présentant une surface en forme de polyèdre tronqué,
- la surface tactile façonnée comporte quatre bandes trapézoïdales,
- la surface tactile façonnée comporte une patte de connexion.

D'autres avantages et caractéristiques apparaîtront à la lecture de la description de l'invention, ainsi que des dessins annexés sur lesquels :
- la figure 1 représente une vue en perspective du capteur, du support et du capteur assemblé au support selon un premier mode de réalisation de l'invention,
- la figure 2 représente une vue en perspective du capteur, du support et du capteur assemblé au support selon un second mode de réalisation de l'invention,
- la figure 3a représente une vue en perspective du capteur et la figure 3b une vue du support assemblé au capteur selon un troisième mode de réalisation de l'invention,
- la figure 4a représente une vue en perspective du capteur et la figure 4b une vue du support assemblé au capteur selon un quatrième mode de réalisation de l'invention,
- la figure 5a représente une vue de dessus du support assemblé au capteur selon un cinquième mode de réalisation de l'invention et la figure 5b est une vue analogue à la figure 5a en perspective.

Sur ces figures, les éléments identiques portent les mêmes numéros de référence.

Le dispositif de commande électrique pour véhicule automobile selon l'invention est par exemple apte à commander un mécanisme motorisé (non représenté) d'ouverture et/ou de fermeture d'un ouvrant, tel que par exemple une vitre d'un véhicule automobile, un toit ouvrant ou encore le coffre / hayon / porte coulissante motorisé d'un véhicule.

Bien entendu, ce type de dispositif peut être adapté à toute autre commande électrique de véhicule automobile comme une commande de siège électrique ou des commandes de lumière telles qu'une liseuse de plafonnier ou un éclairage d'ambiance.

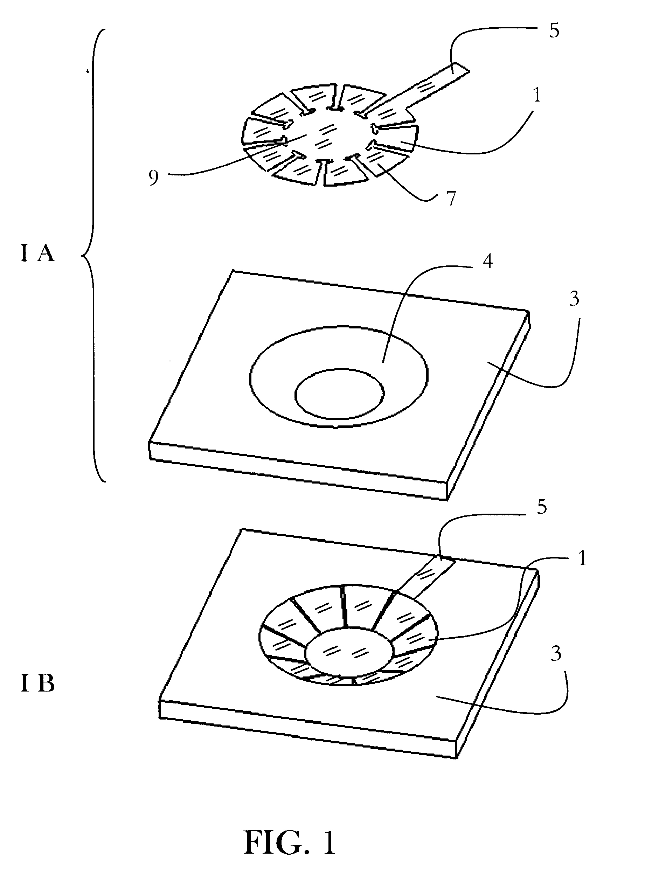

La figure 1 montre un dispositif de commande électrique pour véhicule automobile selon l'invention avant assemblage IA et après assemblage IB.

Le dispositif comporte un capteur 1 à surface tactile utilisant des résistances sensibles à la pression et s'assemblant, par exemple par collage, avec un support 3.

Le support 3 présente une surface tridimensionnelle arrondie 4 en retrait ou en saillie telle qu'une surface galbée ou incurvée.

La surface tactile 1 du capteur présente une forme façonnée de telle sorte qu'à l'état assemblé, par collage par exemple, au moins une partie des surfaces tactiles 1 façonnées se rejoignent en épousant la forme de la surface tridimensionnelle 4 pour former une surface tactile 1 sensiblement continue.

Plus précisément, la surface tactile 1 façonnée présente un nombre prédéfini de bandes 7 d'arc de cercle dont les petits côtés arqués sont reliés à une base commune 9 présentant une forme de disque de sorte que la surface tactile 1 épouse un support 3 présentant une surface en retrait 4 de forme tronconique.

A l'état assemblé (IB sur la figure 1), les arêtes des surfaces tactiles 1 se rejoignent avec un interstice quasi-inexistant et sans recouvrement, formant une surface tactile 1 sensiblement continue, ce qui permet d'éviter la formation d'éventuelles bulles de collage ou encore de bosses qui pourraient engendrer des sensations du touché désagréables pour l'utilisateur.

La forme façonnée de la surface tactile 1 peut avantageusement comporter une patte de connexion 5, reliée à une carte de circuit imprimé par exemple.

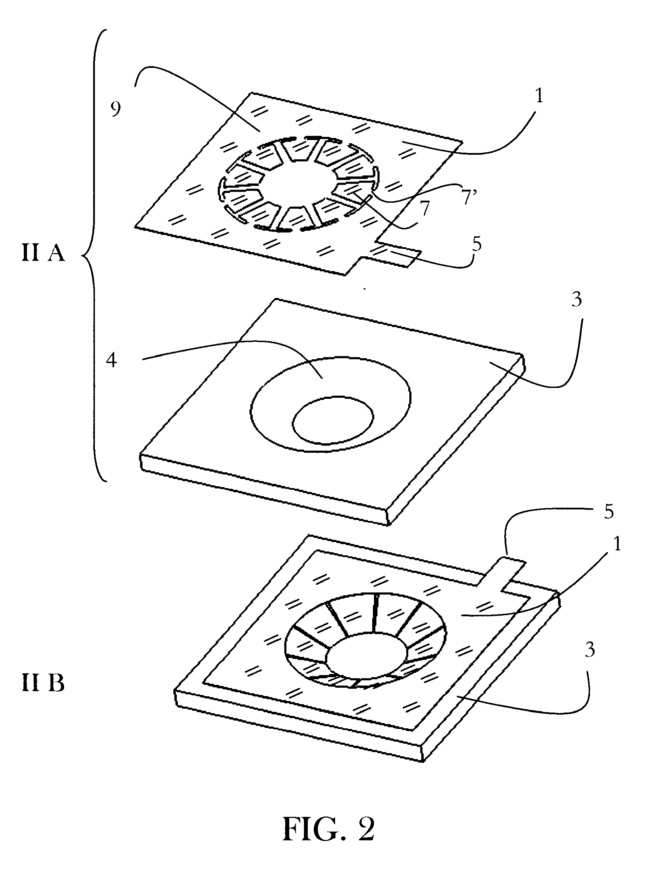

Les figures 2, 3a, 3b, 4a, 4b, 5a et 5b illustrent quatre autres modes de réalisation d'un dispositif de commande selon l'invention.

La figure 2 illustre un second mode de réalisation avant assemblage IIA et après assemblage IIB, dans lequel la surface tactile 1 façonnée présente un nombre prédéfini de bandes 7 d'arc de cercle dont les grands côtés arqués sont reliés via une languette 7' à une base commune 9 présentant une forme parallélépipédique de sorte que la surface tactile 1 épouse un support 3 présentant une surface en retrait 4 de forme tronconique.

Avantageusement pour les deux modes de réalisation décrits, la surface tactile 1 façonnée présente entre six et douze, de préférence dix bandes 7 d'arc de cercle, ce qui présente un bon compromis d'une part pour épouser une surface de support de clavier par exemple et d'autre part pour obtenir une résolution suffisante.

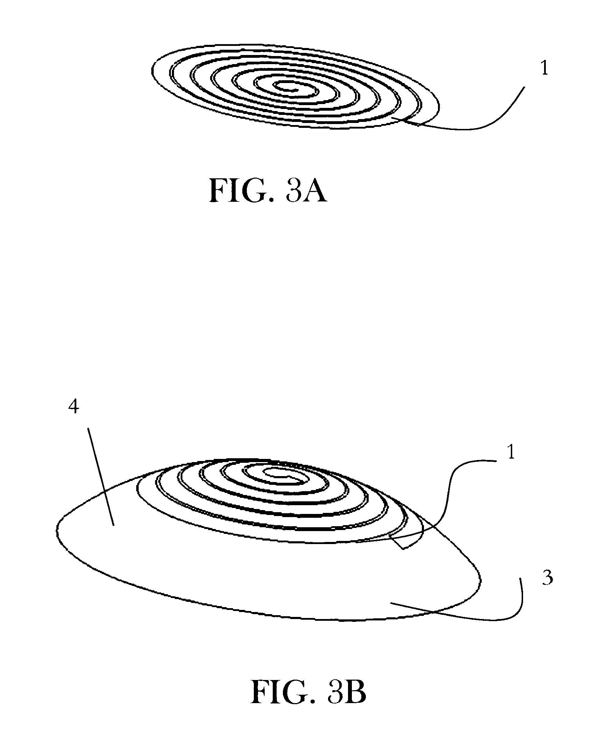

Les figures 3a et 3b illustrent un troisième mode de réalisation dans lequel la surface tactile 1 façonnée présente une forme de spirale de sorte que la surface tactile 1 épouse un support 3 présentant une surface bombée en saillie 4, de préférence sensiblement sphérique.

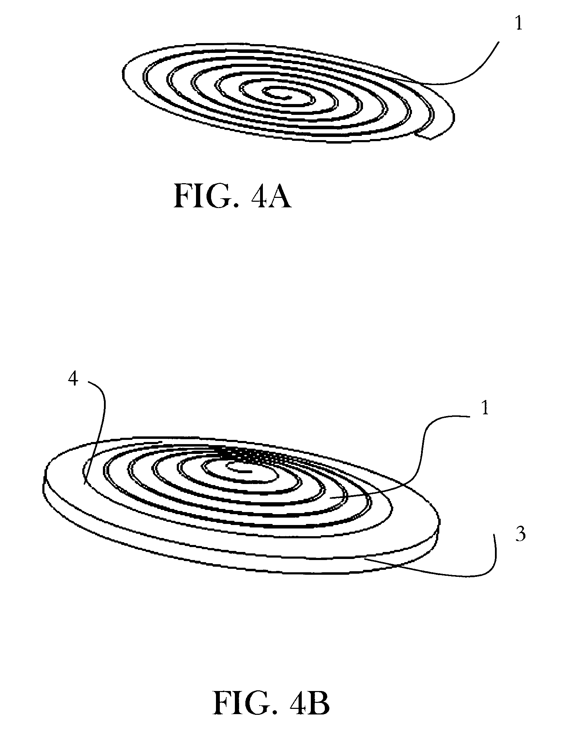

Les figures 4a et 4b illustrent un quatrième mode de réalisation dans lequel la surface tactile 1 façonnée présente une forme de spirale de sorte que la surface tactile 1 épouse un support 3 présentant une surface en saillie 4 sensiblement conique.

Selon un cinquième mode de réalisation, la surface tactile 1 façonnée présente un nombre prédéfini de bandes 11 trapézoïdales dont les petites bases sont reliées à une base commune 13 polygonale, de sorte que la surface tactile 1 épouse un support 3 présentant une surface 4 en saillie ou en retrait, en forme de polyèdre tronqué.

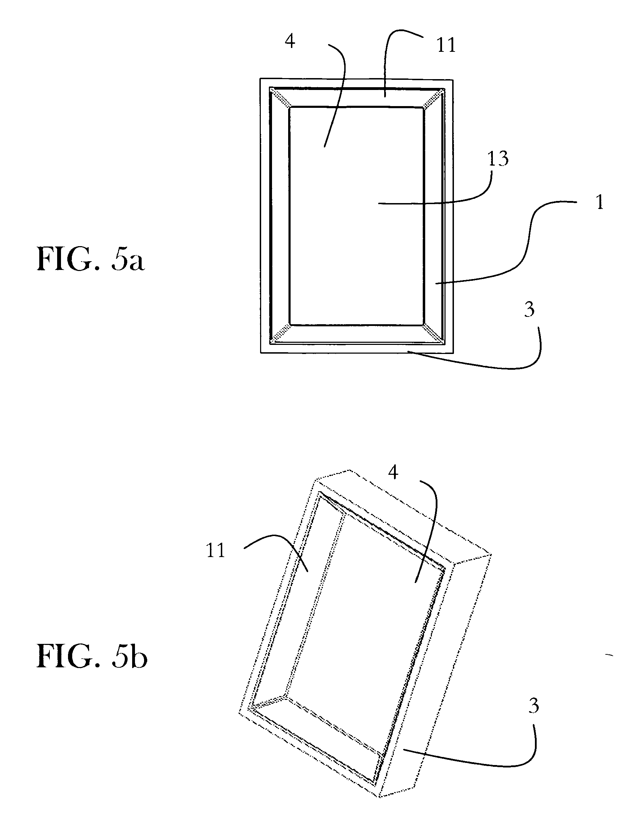

Les figures 5a et 5b illustrent ce cinquième mode de réalisation pour une surface tactile 1 façonnée comportant quatre bandes 11 présentant une forme de trapèze isocèle dont les petites bases sont reliées à une base commune 13 parallélépipédique pour épouser un support 3 en retrait.

Cette disposition convient particulièrement pour la réalisation de touches de clavier par exemple.

La réalisation du dispositif de commande peut comporter le façonnement de la surface tactile 1 à plat dans un premier temps. La surface tactile 1 est ensuite assemblée au support 3, par exemple par collage du capteur, en épousant sa forme tridimensionnelle.

La surface tactile 1 peut être préalablement préformée en trois dimensions par un procédé thermoformant par exemple.

Puis, le capteur assemblé au support 3 est recouvert d'une peau par exemple en silicone, pour former le dispositif de commande électrique.

On comprend qu'un tel dispositif de commande autorise la réalisation d'interfaces de commande présentant des formes tridimensionnelles complexes, en retrait ou en saillie, comme par exemple galbées, sans pour autant perdre en sensibilité tactile.

## Revendications

1. Dispositif de commande électrique pour véhicule automobile, comportant un capteur à surface tactile utilisant des résistances sensibles à la pression et s'assemblant avec un support (3) présentant une surface tridimensionnelle (4) en retrait ou en saillie, la surface tactile (1) du capteur présentant une forme façonnée de telle sorte qu'à l'état assemblé, au moins une partie des surfaces tactiles (1) façonnées se rejoignent en épousant la forme de ladite surface tridimensionnelle (4) pour former une surface tactile (1) sensiblement continue, **caractérisé en ce que** la surface tactile (1) façonnée présente un nombre prédéfini de bandes (7) d'arc de cercle dont les petits côtés arqués sont reliés à une base commune (9) présentant une forme de disque de sorte que ladite surface tactile (1) épouse un support (3) présentant une surface en retrait (4) de forme tronconique.

2. Dispositif de commande électrique pour véhicule automobile, comportant un capteur à surface tactile utilisant des résistances sensibles à la pression et s'assemblant avec un support (3) présentant une surface tridimensionnelle (4) en retrait ou en saillie, la surface tactile (1) du capteur présentant une forme façonnée de telle sorte qu'à l'état assemblé, au moins une partie des surfaces tactiles (1) façonnées se rejoignent en épousant la forme de ladite surface tridimensionnelle (4) pour former une surface tactile (1) sensiblement continue, **caractérisé en ce que** la surface tactile (1) façonnée présente un nombre prédéfini de bandes (7) d'arc de cercle dont les grands côtés arqués sont reliés à une base commune (9) présentant une forme parallélépipédique de sorte que ladite surface tactile (1) épouse un support (3) présentant une surface en retrait (4) de forme tronconique.

3. Dispositif selon l'une quelconque des revendications 1 ou 2, **caractérisé en ce que** la surface tactile (1) façonnée présente entre six et douze, de préférence dix bandes (7) d'arc de cercle.

4. Dispositif de commande électrique pour véhicule automobile, comportant un capteur à surface tactile utilisant des résistances sensibles à la pression et s'assemblant avec un support (3) présentant une surface tridimensionnelle (4) en retrait ou en saillie, la surface tactile (1) du capteur présentant une forme façonnée de telle sorte qu'à l'état assemblé, au moins une partie des surfaces tactiles (1) façonnées se rejoignent en épousant la forme de ladite surface tridimensionnelle (4) pour former une surface tactile (1) sensiblement continue, **caractérisé en ce que** la surface tactile (1) façonnée présente une forme de spirale de sorte que ladite surface tactile (1) épouse un support (3) présentant une surface bombée en saillie (4), de préférence sensiblement sphérique.

5. Dispositif de commande électrique pour véhicule automobile, comportant un capteur à surface tactile utilisant des résistances sensibles à la pression et s'assemblant avec un support (3) présentant une surface tridimensionnelle (4) en retrait ou en saillie, la surface tactile (1) du capteur présentant une forme façonnée de telle sorte qu'à l'état assemblé, au moins une partie des surfaces tactiles (1) façonnées se rejoignent en épousant la forme de ladite surface tridimensionnelle (4) pour former une surface tactile (1) sensiblement continue, **caractérisé en ce que** la surface tactile (1) façonnée présente une forme de spirale de sorte que ladite surface tactile (1) épouse un support (3) présentant une surface en saillie (4) sensiblement conique.

6. Dispositif selon l'une quelconque des revendications précédentes, **caractérisé en ce que** la surface tactile (1) façonnée comporte une patte de connexion (5).

## Claims

1. Electric control device for a motor vehicle, comprising a sensor which has a touch-sensitive surface, uses pressure-sensitive resistors and is assembled with a support (3) having a recessed or projecting three-dimensional surface (4), the touch-sensitive surface (1) of the sensor being of a shape formed in such a way that, when it is assembled, at least some of the touch-sensitive surfaces (1) which are formed join together and fit to the shape of said three-dimensional surface (4) so as to form a substantially continuous touch-sensitive surface (1), **characterised in that** the formed touch-sensitive surface (1) has a predefined number of circle-arc strips (7), the short arcuate sides of which are connected to a common disc-shaped base (9) in such a way that said touch-sensitive surface (1) fits to a support (3) having a frustum-shaped recessed surface (4).

2. Electric control device for a motor vehicle, comprising a sensor which has a touch-sensitive surface, uses pressure-sensitive resistors and is assembled with a support (3) having a recessed or projecting three-dimensional surface (4), the touch-sensitive surface (1) of the sensor being of a shape formed in such a way that, when it is assembled, at least some of the touch-sensitive surfaces (1) which are formed join together and fit to the shape of said three-dimensional surface (4) so as to form a substantially continuous touch-sensitive surface (1), **characterised in that** the formed touch-sensitive surface (1) has a predefined number of circle-arc strips (7), the long arcuate sides of which are connected to a common parallelepiped-shaped base (9) in such a way that said touch-sensitive surface (1) fits to a support (3) having a frustum-shaped recessed surface (4).

3. Device according to either claim 1 or claim 2, **characterised in that** the formed touch-sensitive surface (1) has between six and twelve circle-arc strips (7), preferably ten.

4. Electric control device for a motor vehicle, comprising a sensor which has a touch-sensitive surface, uses pressure-sensitive resistors and is assembled with a support (3) having a recessed or projecting three-dimensional surface (4), the touch-sensitive surface (1) of the sensor being of a shape formed in such a way that, when it is assembled, at least some of the touch-sensitive surfaces (1) which are formed join together and fit to the shape of said three-dimensional surface (4) so as to form a substantially continuous touch-sensitive surface (1), **characterised in that** the formed touch-sensitive surface (1) is spiral-shaped in such a way that said touch-sensitive surface (1) fits to a support (3) having a projecting domed surface (4) which is preferably substantially spherical.

5. Electric control device for a motor vehicle, comprising a sensor which has a touch-sensitive surface, uses pressure-sensitive resistors and is assembled with a support (3) having a recessed or projecting three-dimensional surface (4), the touch-sensitive surface (1) of the sensor being of a shape formed in such a way that, when it is assembled, at least some of the touch sensitive surfaces (1) which are formed join together and fit to the shape of said three-dimensional surface (4) so as to form a substantially continuous touch-sensitive surface (1), **characterised in that** the formed touch-sensitive surface (1) is spiral-shaped in such a way that said touch-sensitive surface (1) fits to a support (3) having a substantially conical projecting surface (4).

6. Device according to any one of the preceding claims, **characterised in that** the formed touch-sensitive surface (1) comprises a connection tab (5).

## Patentansprüche

1. Elektrische Steuereinrichtung für ein Automobil, umfassend einen Sensor mit Berührungsoberfläche, der Resistenzen verwendet, die druckempfindlich sind und sich mit einem Träger (3) verbinden, der eine dreidimensionale Oberfläche (4), vertieft oder vorspringend, aufweist, wobei die Berührungsoberfläche (1) des Sensors eine Form aufweist, die derart gestaltet ist, dass im zusammengebauten Zustand mindestens ein Teil der gestalteten Berührungsoberflächen (1) aufeinander treffen, indem sie sich der Form der dreidimensionalen Oberfläche (4) anpassen, um eine Berührungsoberfläche (1) zu bilden, die im Wesentlichen fortlaufend ist, **dadurch gekennzeichnet, dass** die gestaltete Berührungsoberfläche (1) eine vordefinierte Anzahl von Kreisbogenstreifen (7) aufweist, deren kleine gewölbten Seiten mit einer gemeinsamen Basis (9) verbunden sind und die Form einer Scheibe aufweisen, so dass sich die Berührungsoberfäche (1) einem Träger (3) anpasst, der eine vertiefte Oberfläche (4) mit kegelstumpfartiger Form aufweist.

2. Elektrische Steuereinrichtung für ein Automobil, umfassend einen Sensor mit Berührungsoberflüche, der Resistenzen verwendet, die druckempfindlich sind und sich mit einem Träger (3) verbinden, der eine dreidimensionale Oberfläche (4), vertieft oder vorspringend, aufweist, wobei die Berührungsoberflüche (1) des Sensors eine Form aufweist, die derart gestaltet ist, dass im zusammengebauten Zustand mindestens ein Teil der gestalteten Berührungsoberflächen aufeinander treffen, indem sie sich der Form der dreidimensionalen Oberfläche (4) anpassen, um eine Berührungsoberfläche (1) zu bilden, die im Wesentlichen fortlaufend ist, **dadurch gekennzeichnet, dass** die gestaltete Berührungsoberfläche (1) eine vordefinierte Anzahl von des Kreisbogenstreifen (7) aufweist, deren große gewölbten Seiten mit einer gemeinsamen Basis (9) verbunden sind und eine parallelepipedische Form aufweisen, so dass sich die Berührungsoberfläche (1) einem Träger (3) anpasst, der eine vertiefte Oberfläche (4) mit kegelstumpfartiger Form aufweist.

3. Einrichtung nach einem der Ansprüche 1 oder 2, **dadurch gekennzeichnet, dass** die gestaltete Berührungsoberfläche (1) zwischen sechs und zwölf, vorzugsweise zehn Kreisbogenstreifen aufweist.

4. Elektrische Steuereinrichtung für ein Automobil, umfassend einen Sensor mit Berührungsoberfläche, der Resistenzen verwendet, die druckempfindlich sind und sich mit einem Träger (3) verbinden, der eine dreidimensionale Oberfläche (4), vertieft oder vorspringend, aufweist, wobei die Berührungsoberfläche (1) des Sensors eine Form aufweist, die derart gestaltet ist, dass im zusammengebauten Zustand mindestens ein Teil der gestalteten Berührungsoberflächen (1) aufeinander treffen, indem sie sich der Form der dreidimensionalen Oberfläche (4) anpassen, um eine Berührungsoberfläche (1) zu bilden, die im Wesentlichen fortlaufend ist, **dadurch gekennzeichnet, dass** die gestaltete Berührungsoberfläche (1) eine Spiralenform aufweist, so dass sich die Berührungsoberfläche (1) einem Träger (3) anpasst, der eine vorspringende gewölbte, vorzugsweise im Wesentlichen sphärische Oberfläche (4) aufweist.

5. Elektrische Steuereinrichtung für ein Automobil, umfassend einen Sensor mit Berührungsoberfläche, der Resistenzen verwendet, die druckempfindlich sind und sich mit einem Träger (3) verbinden, der eine dreidimensionale Oberfläche (4), vertieft oder vorspringend, aufweist, wobei die Berührungsoberfläche (1) des Sensors eine Form aufweist, die derart gestaltet ist, dass im zusammengebauten Zustand mindestens ein Teil der gestalteten Berührungsoberflächen (1) aufeinander treffen, indem sie sich der Form der dreidimensionalen Oberfläche (4) anpassen, um eine Berührungsoberfläche (1) zu bilden, die im Wesentlichen fortlaufend ist, **dadurch gekennzeichnet, dass** die gestaltete Berührungsoberfläche (1) eine Spiralenform aufweist, sodass sich die Berührungsoberfläche (1) einem Träger (3) anpasst, der eine vorspringende, im Wesentlichen konische Oberfläche (4) aufweist.

6. Einrichtung nach einem der vorhergehenden Ansprüche, **dadurch gekennzeichnet, dass** die gestaltete Berührungsoberfläche (1) einen Verbindungsschenkel (5) umfasst.
